# EUROPEAN PATENT APPLICATION

(11) **EP 2 175 003 A1**
(43) Date of publication of application: **14.04.2010**
(21) Application number: 08166475.7
(22) Date of filing: 13.10.2008
(51) Int. Cl.: C09K 8/52, E21B 37/00

(54) **Particle-loaded wash for well cleanup**

(71) Applicant: Services Pétroliers Schlumberger, 75007 Paris (FR); Schlumberger Technology B.V., 2514 JG The Hague (NL); Schlumberger Holdings Limited, Tortola (VG); Prad Research and Development Ltd, Road Town, Tortola (VG)
(72) Inventor: Daccord, Gerard, 92142, Clamart (FR)
(74) Representative: Hyden, Martin Douglas

(57) **Abstract**

The invention consists in loading a chemical wash fluid with solid particles to enhance annulus cleanup prior to placing cement slurries (or during the completion phase). The presence of solid particles in a low-viscosity fluid will induce an abrasive cleanup of all soft material present in the annulus in particular gelled mud and mud cake. There is no need for special hardware and no harm to metallic parts. The particles have a size of at least 100 microns.

## Description

### Technical field

This invention relates to wash fluids removing deposits from the wall of an underground borehole. In particular, the invention relates to wash fluids such as are used for well clean-up prior to well cementing or completion operations such as are found in the oil and gas industry.

### Background art

During the construction of wells such as oil or gas wells, it is common to line the whole of or part of the well with a tubular casing (typically steel) which is held in place with cement. Good bonding between the set cement and casing and between the set cement and the formation is important for effective zonal isolation. Poor bonding can limit production and reduce the effectiveness of stimulation treatments.

In a cementing operation, the casing is run into the well and a cement slurry is pumped down the casing and allowed to return back up the annulus between the casing and the borehole wall, where it is allowed to set. In an ideal situation, the surface of the casing and the borehole wall are completely clean and allow a good bond with the cement. However, during the drilling process, it is common for deposits of drilling fluid to build up on the borehole wall, either in the form of mud cake or filter cake formed when solids in the drilling fluid accumulate as fluid passes into the formation, or a gelled deposits where flow of the drilling fluid is insufficient to maintain the drilling fluid in a pumpable form. If these are allowed to remain, they can prevent the cement from forming a good seal with the borehole wall and ultimately provide fluid communication paths that prevent effective zonal isolation.

A number of techniques have been proposed for removing such deposits.

One way of getting rid of soft mud cakes is to add chemical additives to cleaning fluids pumped ahead of the cement to convert soft mud cake to hard mud cake prior to the placement of cement. With this method, the mud deposits remain in place (US6390197).

Alternatively, the soft mud cake can be removed (cleaned) from an annular space of an oilwell prior to cementing. Chemical means, which are based on oxidation or dissolution of mud cake components and which are used during completion operations, as well as mechanical tools, which include wires or brushes fastened on the casing, are sometimes used. Mechanical tools, in particular, remove any soft material, such as gelled mud and mud cake, present on the borehole wall by e.g. scratching (US6148918, US5564500).

Another way to remove soft mud cake is to use a combination of mechanical tools and fluids. For example, a drillpipe or coiled tubing can be tipped with nozzles which direct fluid jet against oilwell walls. This is efficient for removing deposits (i.e. organic or inorganic scales) from the surface of casing or gravel-pack screens.

US7,143,827 discloses fluids for removing mud cakes using a foamed or un-foamed fibre-loaded spacer. The base fluid includes viscosifying polymers and various other additives, in particular scouring particles, preferably silica particles. There is no mention of preferred particle sizes and no mention of the effectiveness of using particles with a lower density. The cleaning efficiencies quoted for these fluids are very poor: 0% and 4% removal respectively.

Abrasive cleaning has been used for many decades, in industries apart from well-cementing, as a standard means of cleaning tubulars in, for example, heat exchangers. Abrasive cleaning is based on circulating particle-loaded fluids in or around the parts to be cleaned. For example, US6663919 and US6585569 disclose systems, used to remove solidified or semi-solid deposits from inside e.g. machines, comprising a fluid phase (air) and a particulate solid phase. US5743790 discloses that cleanup can be improved by adding vibrations or ultrasound.

US5904208 discloses the use of a particle-loaded chemical wash system comprising the use of three discrete lots of liquid to clean out annular spaces in oilwells prior to cementing. Each liquid further comprises a solvent, hydrocarbon or aqueous base either alone or with solid particles. In theory, the role of these solid particles is limited to adjusting liquid density.

GB2382363 A discloses another system used in oilwells which also comprises liquid; the liquid further comprises solid particles in the liquid. To prevent sedimentation, a small particle size (less than 5 microns) is used. As in US5904208, the particles are also used to adjust the density of the liquid. Unlike the liquids of US5904208, the liquid in GB2382363 also comprises a polymer gel.

It is an object of the invention to provide a wash system that avoids some or all of the problems associated with previous systems. The present invention removes deposits without the need for viscosifying polymers, weighting agents and dispersing agents etc, and is based on the recognition that particle-laden fluids can satisfy all of the requirements of a wash fluid.

### Disclosure of the Invention

A first aspect of the invention provides a wash fluid for removing deposits from the wall of an underground borehole, comprising:
- a carrier fluid having a viscosity close to that of water and capable of being pumped over the borehole wall in a turbulent flow regime; and
- a particulate component, dispersed in the carrier fluid and comprising particles having a size of at least 100 microns.

The particulate component has a particle size distribution in the range 100-1000 microns, and a density ranging between 0.8 to 1.3 g/cm³. Preferably, the particles comprise hollow inorganic spheres such as hollow cenospheres or synthetic hollow glass spheres, and common organic polymers such as polypropylene, polyethylene, polyamides, polyesters, rubber.

The fluid may also comprise small fibres to help prevent the eventual creaming or settling of the particles, (examples of such fibres can be found in US7275596, US6599863). Such fibres have little significant effect of the fluid rheology, so the flow regime remains turbulent.

Dispersing agents that have a chemical effect can also be used. These weaken the solid deposits and help keep them in suspension.

Other types of additives include clay stabilizers (e.g. 1 % KCI or organic additives) or salt.

The particulate component concentration is typically 1-10% by volume of the fluid"]

The carrier fluid comprises fresh water or sea water.

A second aspect of the invention provides a method of removing deposits from the wall of an underground borehole, comprising pumping a fluid according to the first aspect of the invention over the wall of the borehole so as to create a turbulent flow at least in the region of the deposits.

This method can be performed ahead of placement of cement or a completion fluid in the borehole.

Further aspects of the invention will be apparent from the following description.

### Brief description of the figures

Figure 1 shows a section of a well to be cemented:
Figure 2 is a schematic view of an experimental flow cell;
Figure 3 is a photograph of a mud cake that has been exposed to flow of water;
Figure 4 is a photograph of a mud cake exposed to a flow of fluid according to an embodiment of the invention; and
Figure 5 shows a plot of the variation of filtrate rate versus the tangential flow rate for water and fluids according to the invention.

### Mode(s) for carrying out the invention

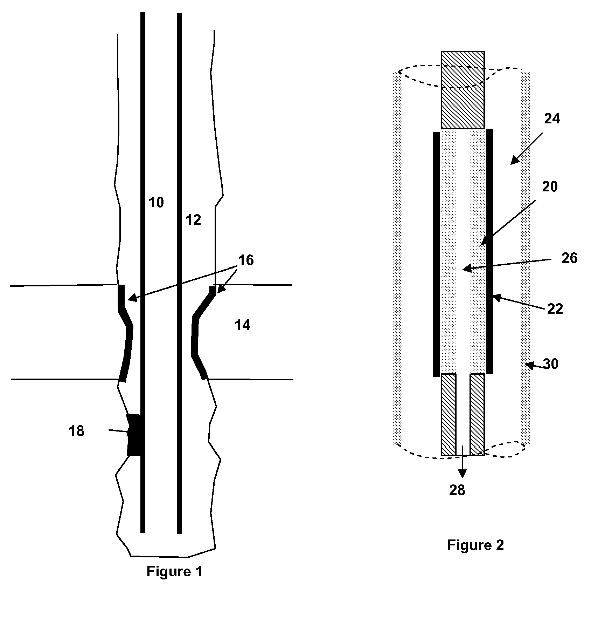

Figure 1 shows a schematic view of a well such as an oil or gas well prior to a cementing operation. A steel casing 10 has been run into the well 12 which passes through a permeable layer 14. During the drilling process, a mud cake 16 has formed on the walls of the well in the permeable layer 14 due to filtration of particulate materials from the drilling fluid as it passes into the permeable formation. Also, a gelled mud deposit 18 has formed at a lower section of the well where the shape and size of the borehole has meant that the flow conditions are not sufficient to provide enough shear to break the gel. It is important to remove the mud cake 16 and gelled deposit 18 as effectively as possible if a good cement bond is to be obtained. Wash fluids are typically pumped through the well ahead of cement to remove such deposits.

The washes according to the invention comprise particle-loaded liquids. Such wash fluids can erode mud cakes efficiently. Loading a low viscosity fluid with particles of a particular size has a dramatic effect on gelled mud and mud cake deposited on a porous surface. A low viscosity allows the fluid to flow under turbulent conditions as it is pumped around the well.

Figure 2 shows an experimental flow cell. A porous hollow cylinder 20 is used to create a mud cake 22 by the application of a differential pressure between the annular space 24 and the internal bore 26. Various fluids, such as drilling fluids or cleaning fluids, can be circulated through the annulus 24. The state of the mud cake 22 is monitored by measuring the filtration rate 28 of fluids passing through the cylinder and into the bore 26. A transparent cell wall 30 allows visual monitoring of the mud cake 22.

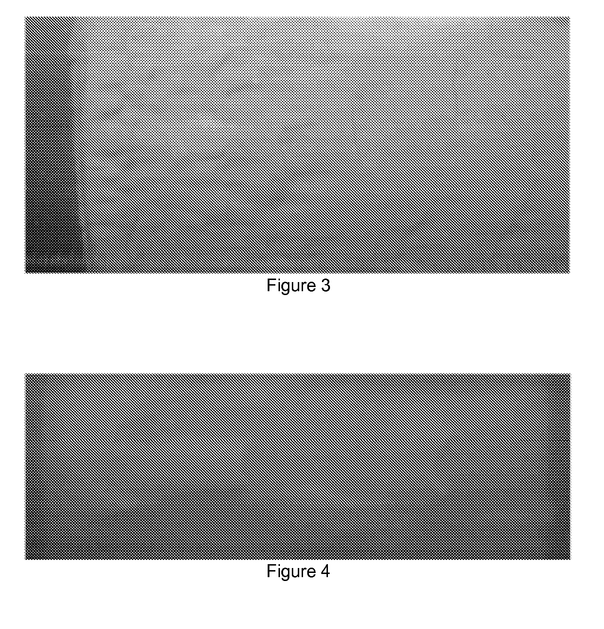

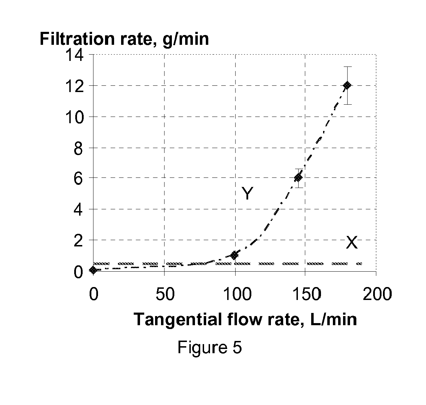

A mud cake is created in the flow cell of Figure 2 by flowing a 60 g/L bentonite suspension over a porous rock, under a 6 bars differential pressure. The dynamic filtration rate is typically 0.5 mL/min, for a filtration surface area of 100 cm². The bentonite suspension is replaced by water, keeping the same differential pressure; the filtration rate is monitored as a function of the water flow rate. No significant variation of the filtration rate ( line X of Figure 5).or aspect of the mud cake (Figure 3) is observed for a plain water flow.

The experiment is repeated but solid particles (with a broad particle size distribution, 0.1-1 mm, density about 0.9 g/cm³) are mixed with the water, at a concentration of 5% by volume. The particle-water suspension homogenised by suitable mixing. For practical reasons, it is preferred to use particles with a density close to that of water (or the carrier fluid) to limit sedimentation or creaming. As this particle-water suspension is flowed over the mud cake, a fast erosion of the mud cake is observed (Figure 4) through the transparent cell wall. In parallel, the filtration rate increases (line Y of Figure 5). Other liquids that can be used include low viscosity hydrocarbons or mixtures of water and other components. The viscosity of the fluids is preferably low so as to maintain a high Reynolds number in normal flow conditions leading to turbulent flow.

Figures 3, 4 and 5 illustrate that the presence of particles in the annular fluid leads to both a sharp increase in filtration rate (more than a ten fold increase) and complete removal of the external mud cake after just a few minutes of flow.

Various changes can be made while staying within the scope of the invention. For example, the amount, material and size of the particulate component can be varied to match conditions. Also, practical applications of wash fluids may contain other additives common in this field such as dispersing agents which can weaken, then keep in suspension, any solid deposit, or clay stabilisers such as organic additives or salt.

Another variation is the use of small fibres to help prevent the eventual creaming or settling of the particles in the fluid. , US7275596 andUS6599863 describe suitable figures. Such fibres have little significant effect on the fluid rheology, so the flow regime remains turbulent.

While the example above is presented in relation to cementing operations, such washes can be used for well cleaning prior to placement of other completion fluid.

## Claims

1. A wash fluid for removing deposits from the wall of an underground borehole, comprising:
- a carrier fluid having a viscosity close to that of water and capable of being pumped over the borehole wall in a turbulent flow regime; and
- a particulate component, dispersed in the carrier fluid and comprising particles having a size of at least 100 microns.

2. A wash fluid as claimed in claim 1, wherein the particulate component has a particle size distribution in the range 100-1000 microns.

3. A wash fluid as claimed in claim 1 or 2, wherein the particles have a density in the range 0.8 g/cm³ to 1.3 g/cm³.

4. A wash fluid as claimed in claim 1, 2 or 3, wherein, the particles comprise hollow inorganic spheres and organic polymers.

5. A wash fluid as claimed in claim 4, wherein the particles comprise synthetic hollow glass spheres, polypropylene, polyethylene, polyamides, polyesters or rubber.

6. A wash fluid as claimed in any preceding claim, wherein the particulate component comprises 1-10% by volume of the fluid.

7. A wash fluid as claimed in any preceding claim, wherein the carrier fluid comprises fresh water or sea water.

8. A wash fluid as claimed in any preceding claim, further comprising a fibre component as an anti-settling or suspensions stabilising additive.

9. A wash fluid as claimed in any preceding claim, further comprising dispersing agents, clay stabilisers, salts and other additives that do not significantly change fluid theology.

10. A method of removing deposits from the wall of an underground borehole, comprising pumping a fluid as claimed in any of claims 1-9 over the wall of the borehole so as to create a turbulent flow at least in the region of the deposits.

11. A method as claimed in claim 10, when performed ahead of placement of cement in the borehole.

12. A method as claimed in claim 10, when performed ahead of placement of a completion fluid in the borehole.
